# FASCICULE DE BREVET EUROPEEN

(11) **EP 2 021 247 B1**
(45) Date de publication et mention de la délivrance du brevet: **17.03.2010**
(21) Numéro de dépôt: 07729284.5
(22) Date de dépôt: 18.05.2007
(51) Int. Cl.: B64F 1/36, F24F 1/02

(54) **UNITE ET PROCEDE DE CONDITIONNEMENT D'AIR**
LUFTKONDITIONIERUNGSEINHEIT- UND VERFAHREN
AIR CONDITIONING UNIT AND METHOD

(30) Priorité: 19.05.2006 EP 06114251
(43) Date de publication de la demande: 11.02.2009
(73) Titulaire: Lebrun-Nimy en Abrege Lebrun SA, 7020 Nimy (BE)
(72) Inventeur: URBAIN, Claudy, Christian, B-7131 Waudrez (BE)
(74) Mandataire: Calvo de Nó, Rodrigo
(86) Numéro de dépôt international: PCT/EP2007/054840
(87) Numéro de publication internationale: WO 2007/135103

(56) Documents cités:
- DE-A1- 3 314 763
- JP-A- 10 122 607
- US-A- 5 031 690
- US-A- 5 099 652
- US-A1- 2004 045 308

## Description

La présente invention se rapporte à une unité et un procédé de conditionnement d'air pour des enceintes, tels que des aéronefs en stationnement au sol.

II est souvent nécessaire de faire parvenir de l'air conditionné vers des enceintes afin de maintenir des paramètres adéquats pour le confort de personnes et animaux, le fonctionnement d'appareils et/ou la conservation de marchandises. Par air conditionné on entend de l'air dont au moins la température est maintenue dans une plage sensiblement indépendante de la température de l'air ambiant. En particulier, dans des aéronefs en stationnement au sol, si des systèmes embarqués de conditionnement d'air ne sont pas en fonctionnement, la température à bord peut rapidement devenir très inconfortable pour les passagers ainsi que le personnel de bord et/ou endommager des équipements de bord, tels que l'électronique de bord. Pour éviter cela, il est bien connu de l'homme du métier d'employer des unités d'air conditionné éventuellement mobiles et/ou autonomes pour faire parvenir de l'air conditionné à l'intérieur de l'aéronef, normalement à travers des gaines flexibles reliant à l'aéronef au moins une sortie d'air de l'unité d'air conditionné, afin de maintenir une température adéquate dans la cabine, et/ou dans des soutes de bagages et/ou avionique. De telles unités d'air conditionné ont été décrites par exemple dans les brevets américain US 5,031,690 et US 5,099,652, dans la demande de brevet allemand DE 33 14 763 A1, dans la demande de brevet japonais JP 10-122607 et dans la demande de brevet américain US 2004/0045308 A1.

En particulier, US 5,031,690, US 5,099,652 et DE 33 14 763 A1 divulguent des unités de conditionnement d'air comportant :
- un circuit d'air avec une entrée d'air, un ventilateur principal et une sortie d'air adaptée pour être connectée à une enceinte, comme par exemple un aéronef au sol, de préférence à travers une ou plusieurs gaines flexibles, et
- un circuit de réfrigérant comportant un échangeur-évaporateur placé dans ledit circuit d'air pour refroidir l'air en évaporant le réfrigérant, un compresseur et un condenseur pour condenser le réfrigérant avant son retour dans l'échangeur-évaporateur.

Dans ces unités, un procédé de conditionnement d'air peut être effectué comportant les étapes suivantes :
- de l'air ambiant entre dans un circuit d'air propulsé par un ventilateur principal,
- ledit air ambiant passe à travers un échangeur-évaporateur, où il est refroidi par évaporation d'un débit de réfrigérant circulant dans l'échangeur-évaporateur,
- ledit air refroidi est propulsé à travers une sortie d'air vers un espace sensiblement clos, comme par exemple un aéronef au sol, de préférence à travers une ou plusieurs gaines flexibles,
- ledit réfrigérant est comprimé dans un compresseur en aval de l'échangeur-évaporateur,
- ledit réfrigérant est condensé dans un condenseur en aval du compresseur

Toutefois, toutes ces unités de conditionnement d'air ont l'inconvénient de ne pas pouvoir adapter la puissance de réfrigération que dans des plages très limitées. Souvent, comme décrit dans l'introduction d'US 5,099,652, la température de l'air est simplement régulée en alternant entre une position de réfrigération à pleine puissance et une position de réfrigération zéro. Bien que dans ce document ainsi que DE 33 14 763 A1 il soit proposé de réguler la puissance de réfrigération en variant la puissance du compresseur. Toutefois, l'efficacité de cette régulation est limitée par les paramètres fixes de l'échangeur-évaporateur. Pour cette raison, les unités et procédés de conditionnement d'air existants présentent une adaptabilité limitée aux variations des paramètres environnementaux, tels que la température et humidité de l'air ambiant. Cette adaptabilité est compromise en outre par une basse efficacité en dehors des paramètres optimum de fonctionnement et par la nécessité d'effectuer des ajustements manuels complexes afin de réguler la puissance de réfrigération.

Un autre inconvénient très important des unités d'air conditionné de l'état de la technique est leur manque d'adaptabilité aux paramètres des enceintes vers lesquelles l'air conditionné est destiné. Chaque enceinte est caractérisée par une courbe débit/pression qui lui est propre. Cette caractéristique peut être fixe ou évoluer avec le temps. La courbe débit/pression d'une enceinte peut varier, par exemple, en fonction de la taille de l'enceinte, d'autres caractéristiques propres à l'enceinte, des circonstances de l'environnement de connexion, et de certaines variables dans le temps, telles que l'ouverture ou modification du gainage de distribution d'air dans une enceinte telle qu'un avion en stationnement au sol. Toutefois, les unités d'air conditionné de l'état de la technique ne disposent de moyens pour s'adapter à de telles variations de la courbe débit/pression.

Ce manque d'adaptabilité est particulièrement problématique pour des unités d'air conditionné pour des aéronefs en stationnement au sol. Ces aéronefs peuvent avoir des volumes extrêmement variés et donc des courbes débit/pression très divergentes. Chaque aéronef présente donc un ensemble de caractéristiques qui lui sont propres en termes de débit et de pression de refoulement. Une unité d'air conditionné destinée à un aéronef de petite taille, comme par exemple un réacteur d'affaires, ne pourra pas délivrer un débit d'air conditionné suffisant pour un aéronef de grande taille, tel qu'un avion gros porteur. À l'inverse, une unité de conditionnement d'air destinée à un gros porteur aura une telle puissance de ventilation que, si elle était connectée à un réacteur d'affaires, le refoulement du petit fuselage causerait une surpression telle dans l'avion d'affaires ainsi que dans les gaines flexibles de connexion qu'ils pourraient être endommagés.

En outre, dans un même aéronef, cette courbe caractéristique débit/pression peut évoluer pendant le fonctionnement de l'unité en fonction, par exemple, d'un déplacement des gaines flexibles de connexion entre l'unité de conditionnement d'air et l'aéronef, ou par l'ouverture et/ou fermeture de clapets sur le réseau interne de distribution d'air de l'aéronef.

Comme la puissance de réfrigération doit être adaptée au débit d'air conditionné, la variabilité réduite de la puissance de réfrigération dans les unités d'air conditionné conditionne aussi leur adaptabilité à des enceintes avec des courbes débit/pression différentes.

Par conséquent, avec les unités d'air conditionné de l'état de la technique, chaque aéroport doit disposer de tout un éventail d'unités d'air conditionné spécifiquement adaptées à chaque taille et même à chaque modèle d'aéronef. Étant donné le coût de chaque unité, ceci peut donc représenter un capital immobilisé très important, avec un impact considérable dans la rentabilité d'un aéroport.

Un objet de la présente invention est donc de pourvoir une unité et un procédé de conditionnement d'air à grande adaptabilité tant aux paramètres environnementaux qu'à des différentes courbes débit/pression des enceintes à refroidir sans compromettre l'efficacité de refroidissement.

Pour parvenir à cela, dans l'unité de conditionnement d'air de l'invention :
- ledit échangeur-évaporateur comporte plusieurs circuits parallèles avec chacun une vanne de détente individuelle,
- ledit circuit d'air comporte aussi une sonde de température en aval de l'échangeur-évaporateur reliée à des moyens de contrôle desdites vannes de détente individuelles pour réguler le débit de réfrigérant afin de maintenir la température d'air en aval de l'échangeur-évaporateur dans une plage de consigne, et une sonde de pression à la sortie d'air reliée à des moyens de régulation de vitesse et/ou puissance du ventilateur principal afin de ne pas dépasser une surpression maximale à la sortie d'air, et
- ledit circuit de réfrigérant comporte aussi une sonde de pression d'aspiration du compresseur reliée à des moyens de régulation du débit masse du compresseur afin de maintenir la pression d'aspiration du compresseur dans une plage de consigne.

De cette manière, la puissance de réfrigération peut être régulée à travers le débit de réfrigérant dans l'échangeur-évaporateur en fonction de la température d'air en aval dudit échangeur-évaporateur. Comme lesdits moyens de contrôle peuvent n'ouvrir que les vannes de détente des seuls circuits de l'échangeur-évaporateur nécessaires pour atteindre la puissance de réfrigération nécessaire, le débit de réfrigérant dans chacun des circuits ouverts peut rester près du point optimal. Dans des telles conditions, la régulation du débit masse du compresseur afin de maintenir la pression d'aspiration du compresseur dans une plage de fonctionnement optimal permet de réduire la puissance de réfrigération délivrée par le compresseur lorsque des vannes de détente de l'échangeur-évaporateur sont fermées. Avec le compresseur travaillant à faible débit, la consommation d'énergie peut être réduite. Cette régulation du débit masse de réfrigérant aspiré par le compresseur peut être opérée de plusieurs manières. Par exemple, dans le cas d'un compresseur rotatif, comme par exemple un compresseur à vis, le débit peut être régulé à travers la vitesse de rotation du compresseur. Dans des compresseurs à vis, il est aussi possible de réguler le débit par action sur un tiroir de capacité du compresseur modifiant la longueur utile de la vis. Une autre manière de réguler le débit, si le compresseur comporte plusieurs unités compresseur installées en parallèle est par la régulation du nombre d'unités compresseur en fonctionnement. De manière similaire, dans le cas d'un compresseur à pistons comportant plusieurs cylindres, où chaque cylindre comporte au moins un clapet d'aspiration et au moins un clapet de refoulement, il est possible de réguler le débit du compresseur par action sur lesdits clapets d'aspiration et de refoulement, de manière connue de la personne du métier. Enfin, il est aussi possible de réguler le débit du compresseur moyennant une vanne de dérivation, généralement externe au compresseur.

En outre, la vitesse et/ou la puissance du ventilateur principal pourra être régulée de manière à produire le débit d'air conditionné maximal pour chaque enceinte. Comme la température de l'air en aval de l'échangeur-évaporateur dépendra tant de la puissance de réfrigération que du débit d'air à refroidir, cette régulation en combinaison avec les régulations des vannes de détente individuelles et du débit masse de réfrigérant aspiré par le compresseur cités ci-dessus a l'effet intéressant d'ajuster automatiquement non seulement le débit d'air mais aussi la puissance de réfrigération en fonction de chaque espace. II devient donc possible, par exemple, d'utiliser une même unité d'air conditionné pour tout un éventail d'aéronefs de tailles différentes, et ce sans devoir procéder à des ajustements manuels complexes pour chaque appareil et en gardant une bonne efficacité dans toutes les circonstances.

Avantageusement, ledit circuit d'air comporte aussi une sonde de température à la sortie d'air reliée à des moyens de régulation de vitesse et/ou puissance du ventilateur principal pour contrôler son débit afin de maintenir la température à la sortie d'air dans une plage de consigne. Ceci permet de réguler la température de l'air conditionné à travers son débit.

Avantageusement, ledit condenseur est un condenseur refroidi par air. Cette option est particulièrement simple et évite des moyens, comme par exemple des réservoirs d'eau, qui seraient difficilement adaptables à une unité mobile et/ou autonome.

Plus avantageusement, ledit condenseur refroidi par air peut comporter un ventilateur de refroidissement et une sonde de pression du réfrigérant reliée à des moyens de régulation de vitesse et/ou puissance du ventilateur de refroidissement pour contrôler le refroidissement du condenseur afin de maintenir la pression du réfrigérant dans le condenseur dans une plage de consigne. Ceci permet de réguler la vitesse et/ou la puissance du ventilateur de refroidissement afin de l'adapter, entre autres, aux changements de débit de réfrigérant à travers le condenseur et maintenir la pression de condensation.

Avantageusement, ledit échangeur-évaporateur peut comporter aussi une sonde de température du réfrigérant en sortie de chacun desdits circuits parallèles reliée auxdits moyens de contrôle desdites vannes de détente pour réguler le débit de réfrigérant afin d'assurer l'évaporation de sensiblement tout le débit de réfrigérant dans ledit échangeur-évaporateur. Ceci permet d'optimiser le débit de réfrigérant dans chaque circuit de l'échangeur-évaporateur en ne laissant circuler dans chaque circuit que le réfrigérant pouvant être vaporisé par la chaleur échangée.

Encore plus avantageusement, ledit échangeur-évaporateur peut comporter aussi une sonde de pression du réfrigérant en sortie desdits circuits parallèles reliée auxdits moyens de contrôle desdites vannes de détente pour corriger la température captée par la sonde de température du réfrigérant en sortie du même circuit parallèle.

Dans des conditions de haute humidité, une puissance de réfrigération excessive pourrait provoquer la formation de givre sur la surface de l'échangeur-évaporateur, perturbant et même bloquant le débit d'air à travers l'échangeur-évaporateur et provoquant donc une panne de l'unité de conditionnement d'air. Pour éviter cela, ledit échangeur-évaporateur peut avantageusement comporter en outre une sonde de température superficielle de l'échangeur-évaporateur reliée auxdits moyens de contrôle desdites vannes de détente pour réguler le débit de réfrigérant afin d'éviter la formation de givre sur la surface de l'échangeur-évaporateur. Avec cette sonde reliée aux moyens de contrôle des vannes de détente, la puissance de réfrigération peut être régulée afin de maintenir la température au dessus d'un seuil de danger de formation de givre.

Entre le condenseur et l'échangeur-évaporateur, des sources de chaleur peuvent réchauffer le débit de réfrigérant. Si le refroidissement dans le condenseur est régulé de manière optimale, la température du réfrigérant devrait être juste en-dessous de la température de condensation. Un réchauffement ou une légère baisse de pression pourraient donc provoquer la formation de bulles de gaz dans le réfrigérant pouvant compromettre le fonctionnement optimal de l'unité de conditionnement d'air. Pour cette raison, le circuit de réfrigérant peut avantageusement comporter en outre un circuit économiseur en aval du condenseur, ledit circuit économiseur comportant une branche principale, une branche secondaire avec une vanne de détente, et un échangeur de chaleur entre ladite branche principale et ladite branche secondaire en aval de sa vanne de détente, de manière à ce que, en fonctionnement, un débit secondaire de réfrigérant soit déviée vers ladite branche secondaire, pour être détendue dans la vanne de détente et refroidir à travers l'échangeur de chaleur un débit primaire de réfrigérant passant par la branche principale afin d'éviter l'apparition de bulles de gaz dans le réfrigérant en amont de l'échangeur-évaporateur. En profitant de la chaleur d'évaporation du débit secondaire de réfrigérant, il est possible de sous-refroidir le débit primaire délivré à l'échangeur-évaporateur afin d'empêcher la formation de bulles de gaz en aval de l'échangeur-évaporateur.

Avantageusement, afin d'assurer l'alimentation électrique de l'unité de conditionnement d'air en mode autonome, l'unité peut comporter en outre un moteur thermique, de préférence Diesel, couplé à un générateur.

Encore plus avantageusement, ledit moteur thermique peut comporter un circuit de refroidissement du moteur avec :
- un radiateur, de préférence avec un ventilateur, pour refroidir un fluide de refroidissement du moteur,
- un échangeur de chaleur complémentaire placé dans ledit circuit d'air, de préférence en aval dudit échangeur-évaporateur, pour chauffer l'air en refroidissant le fluide de refroidissement du moteur, et
- une vanne à trois voies permettant de diriger le fluide de refroidissement du moteur alternativement vers le radiateur ou vers l'échangeur de chaleur complémentaire.

Ces caractéristiques permettent non seulement d'évacuer la chaleur produite par le fonctionnement du moteur thermique, mais aussi d'éventuellement utiliser cette chaleur pour chauffer le débit d'air conditionné quand l'unité fonctionne en mode chauffage.

Avantageusement, ledit circuit d'air peut comporter en outre des moyens de chauffage électrique, de préférence en aval dudit échangeur-évaporateur, avec un ensemble de résistances électriques, de préférence câblées en plusieurs étages, et une sonde de température en aval des moyens de chauffage reliée à des moyens de contrôle dudit ensemble de résistances électriques pour réguler la puissance de chauffage afin de maintenir la température d'air en aval des moyens de chauffage dans une plage de consigne. Ceci permet un fonctionnement de l'unité de conditionnement d'air en mode chauffage avec une régulation fine de la puissance de chauffage.

Avantageusement, ledit réfrigérant peut être un hydrofluorocarbure, de préférence du R134a. Un tel réfrigérant permet une bonne efficacité énergétique, avec une bonne sécurité et un impact environnemental réduit.

Avantageusement, ledit ventilateur principal peut être un ventilateur centrifuge. Un tel ventilateur peut délivrer un grand débit d'air avec un encombrement relativement réduit.

Avantageusement, ledit compresseur peut être un compresseur à vis.

Avantageusement, ladite unité peut être mobile et autonome, pour, par exemple, fournir de l'air conditionné à des plateformes mobiles, telles que des aéronefs au sol.

Des détails concernant l'invention sont décrits ci-après de manière illustrative mais non restrictive en faisant référence aux dessins.
La figure 1 représente une vue latérale d'une unité de conditionnement d'air suivant un mode de réalisation de l'invention.
La figure 2 représente une vue de dessus de la même unité de conditionnement d'air.
La figure 3 est un diagramme de pression et débit.
La figure 4 représente un schéma du circuit de réfrigérant de la même unité de conditionnement d'air.

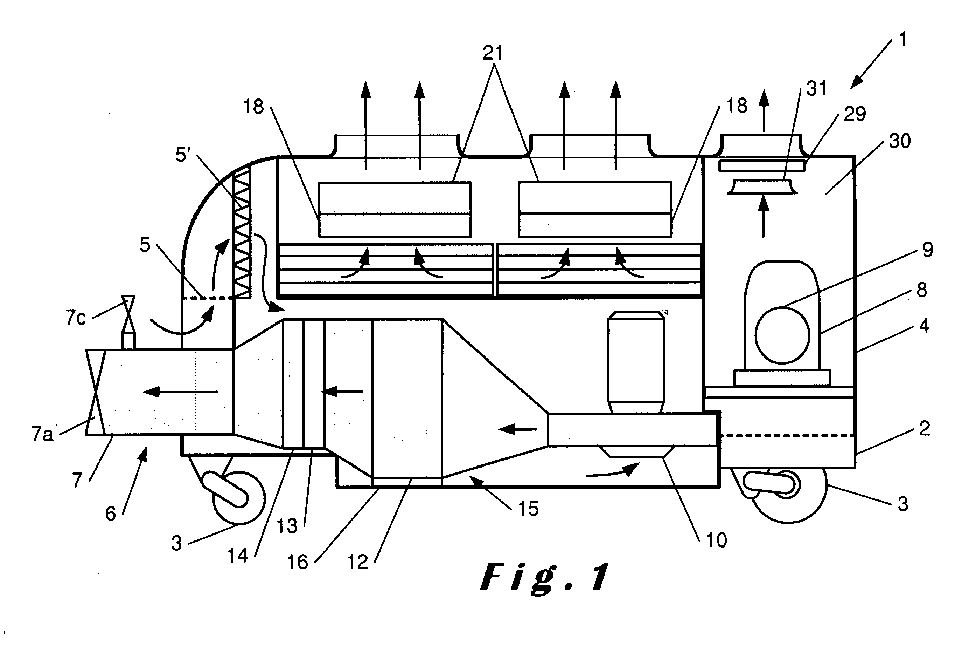

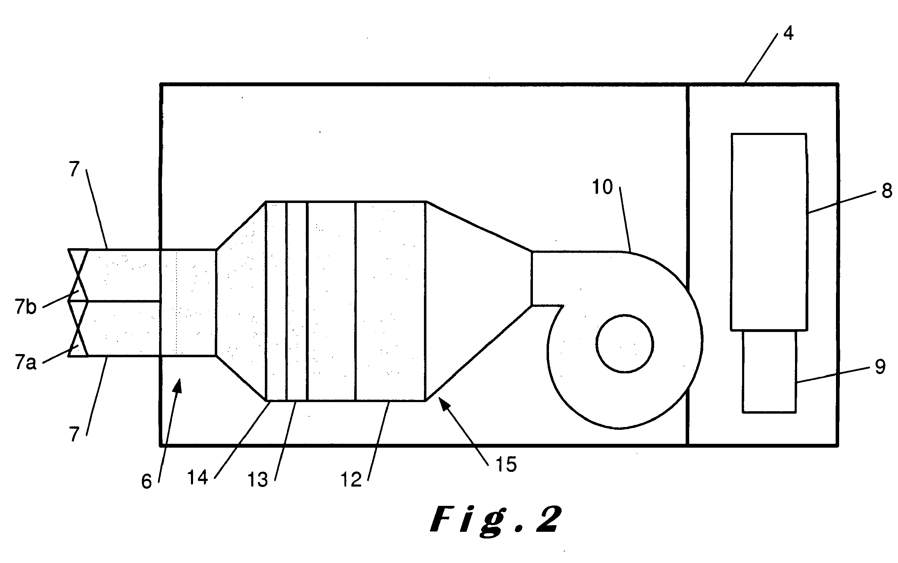

L'unité de conditionnement d'air 1 pour avion illustrée dans les figures 1 et 2 comporte un châssis 2 monté sur des roues 3, bien qu'il puisse alternativement être fixe, une carrosserie 4 munie d'une entrée d'air 5 avec des filtres 5', et une sortie d'air 6 avec deux bouches de pulsion 7 sur lesquelles il est possible de connecter des gaines flexibles pour conduire l'air conditionné vers un avion et un système de clapets 7a,7b,7c permettant l'ouverture et/ou la fermeture de chacune des deux bouches d'air 7, ainsi que l'éventuelle dérivation de l'air vers l'atmosphère.

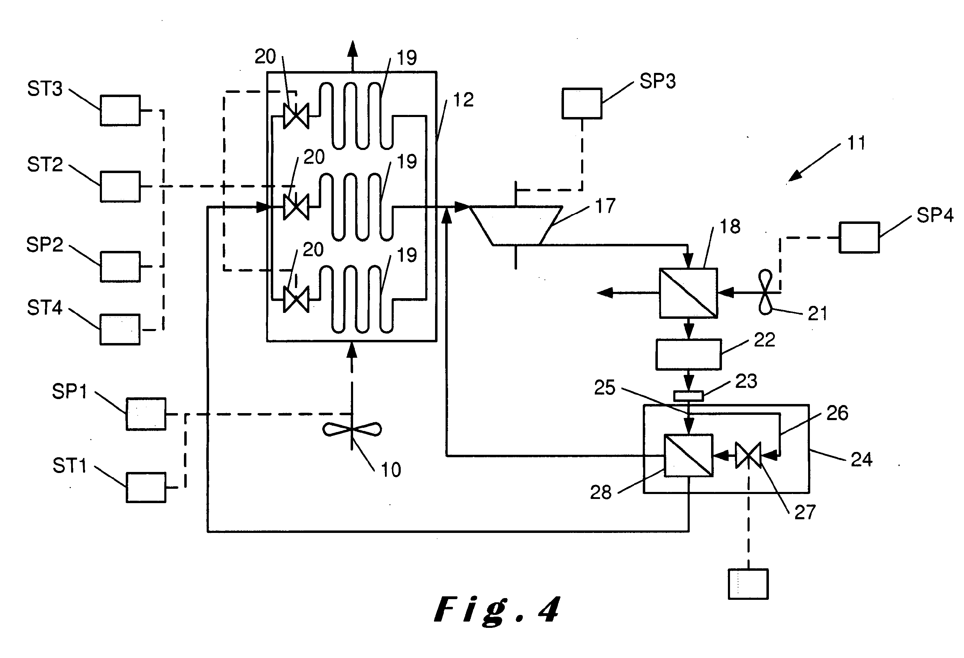

L'unité 1 comporte aussi, à l'intérieur de la carrosserie 4, un moteur Diesel 8 couplé à un générateur électrique 9 pour assurer l'alimentation en électricité des différents éléments de l'unité 1, un ventilateur centrifuge 10 à vitesse variable pour assurer la distribution d'air vers l'avion, un circuit de réfrigérant 11 (représenté dans la figure 4) avec un échangeur-évaporateur 12 pour le refroidissement de l'air, des moyens de chauffage électrique 13 avec une pluralité de résistances électriques, et un échangeur de chaleur complémentaire 14 connecté au circuit de refroidissement du moteur Diesel 8.

En fonctionnement, l'air destiné à l'avion est aspiré via l'entrée d'air 5 et des filtres 5' par le ventilateur centrifuge 10 situé à l'intérieur de la carrosserie 4 et qui fonctionne en aspiration libre. L'ensemble des panneaux formant la carrosserie 4 forme ainsi une gaine d'air d'aspiration en dépression.

Après être passé par le ventilateur 10, l'air est dirigé vers un caisson de traitement d'air 15 résistant à la pression dans lequel on trouve l'échangeur-évaporateur 12, les moyens de chauffage électrique 13 et l'échangeur de chaleur complémentaire 14.

L'unité 1 comporte aussi un bac 16 de récolte d'eau de condensation placé directement en dessous de l'échangeur-évaporateur 12 afin de récolter l'humidité de l'air aspiré se condensant sur l'échangeur-évaporateur 12.

L'air refroidi ou chauffé est alors envoyé, via les deux bouches de pulsion 7, vers les gaines flexibles et l'avion.

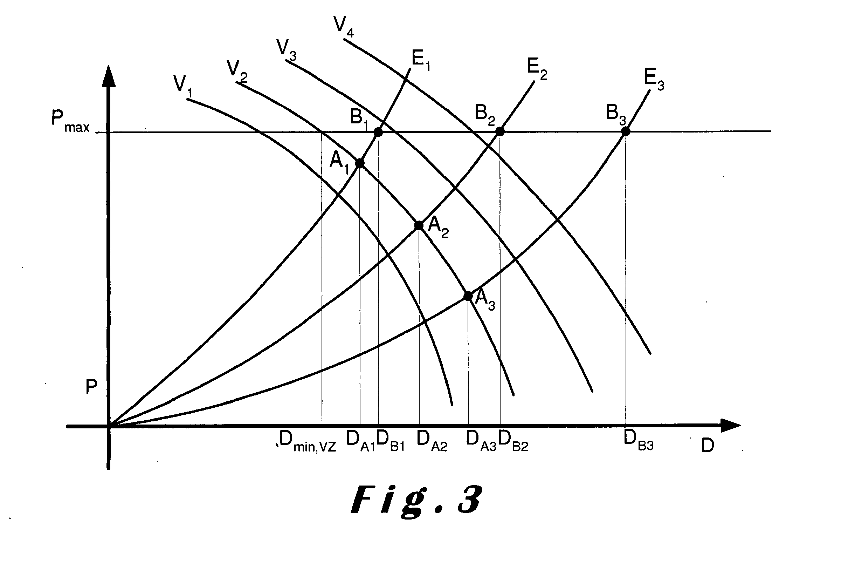

Une sonde de pression SP1 contrôle en permanence la pression de refoulement du ventilateur 10 lors du fonctionnement. Cette sonde, par l'intermédiaire d'un variateur de fréquence, fait varier la vitesse de rotation du ventilateur 10 afin que celui-ci délivre le maximum de débit possible sans dépasser le maximum de pression autorisé, afin de respecter la résistance mécanique des gaines flexibles, du gainage interne de l'avion et de l'unité 1 de conditionnement d'air. Ceci est illustré dans le diagramme de la figure 3. Dans ce diagramme, l'axe vertical correspond à la surpression P à la sortie d'air 6 par rapport à la pression de l'air ambiant, avec un maximum de surpression autorisé Pₘₐₓ, et l'axe horizontal correspond au débit D. Les courbes E₁, E₂ et E₃ sont des courbes débit/pression d'enceintes de caractéristiques différentes. Les courbes V₁, V₂, V₃ et V₄ sont des courbes débit/pression d'un même ventilateur principal 10 à des différentes vitesses. Si le ventilateur principal 10 opère à une vitesse constante indépendamment des caractéristiques de l'enceinte, le débit d'air conditionné suivra une des courbes V₁, V₂, V₃ ou V₄. Avec, par exemple, la courbe V₂, l'unité 1 ne pourra pas délivrer un débit d'air conditionné inférieur à Dₘᵢₙ,V₂, sous lequel la surpression dépasserait le maximum de surpression autorisé Pₘₐₓ, et risquerait de causer des dommages. Par contre, le débit ne pourrait augmenter qu'avec une descente très sensible de la surpression de refoulement de l'enceinte. Ainsi, le débit d'air conditionné qui pourrait être délivré aux enceintes représentées par les courbes E₁, E₂ et E₃ serait déterminé par les intersections A₁, A₂, A₃, respectivement, de ces courbes avec V₂. Avec la régulation de la vitesse du ventilateur principal 10 en fonction du maximum de surpression autorisé Pₘₐₓ, le débit est déterminé par les intersections B₁,B₂ et B₃ d'E₁, E₂ et E₃ avec Pₘₐₓ. Comme on peut voir dans le diagramme, les débits D_{B1}, D_{B2} et D_{B3} en résultant sont sensiblement supérieurs aux débits D_{A1}, D_{A2}, et D_{A3} du ventilateur à vitesse fixe.

Toute modification du réseau de refoulement d'air avant la connexion ou pendant le fonctionnement se traduit directement par une modification de la vitesse de rotation du ventilateur 10 afin que la pression d'air reste dans une plage acceptable. Alternativement, le ventilateur 10 pourrait être régulé en puissance, plutôt qu'en vitesse.

Une sonde de température ST1 contrôlant la sortie d'air vers l'avion influence également la vitesse de rotation du ventilateur 10, et/ou sa puissance, en évitant la pulsion dans l'avion d'un air trop chaud, en mode refroidissement, ou trop froid, en mode chauffage. La réduction de la vitesse et/ou puissance permet dès lors de réduire la charge frigorifique ou calorifique que l'unité doit délivrer en mode froid ou mode chaud, respectivement, pour respecter sa consigne. De la sorte, l'unité 1 peut être utilisée en dehors des conditions de design sans poser de problème quant au confort apporté par la valeur de la température de pulsion d'air ou à l'inconfort résultant d'une température de pulsion trop basse.

Le mode de refroidissement de l'unité 1 est assuré par un circuit de réfrigérant 11 basé sur le cycle à compression et sur la détente directe de fluide réfrigérant. Ce circuit 11 est illustré dans la figure 4.

Le fluide réfrigérant utilisé est un HFC (hydrofluorocarbure), de préférence du R134a, pour obtenir de meilleurs coefficients de performance et assurer un approvisionnement aisé du fluide réfrigérant, tout en respectant les contraintes environnementales.

En mode refroidissement, la chaleur est prélevée de l'air traité par l'évaporation du réfrigérant dans l'échangeur-évaporateur 12. Cette chaleur, additionnée à celle produite par la compression dans un compresseur 17, est rejetée à l'ambiance lors de la condensation du réfrigérant dans un condenseur à air 18.

L'échangeur-évaporateur 12 comporte une pluralité de circuits parallèles 19. Chaque circuit parallèle 19 comporte, à son entrée, une vanne de détente 20 contrôlée électroniquement par un régulateur. De cette manière, en fonctionnement, le réfrigérant est détendu à l'aide d'une ou plusieurs de ces vannes de détente 20 en fonction de la charge frigorifique nécessaire. Ces vannes de détente 20 ont donc la particularité d'adapter le débit de réfrigérant à la charge frigorifique strictement nécessaire.

Le régulateur des vannes de détente 20 contrôle plusieurs grandeurs physiques :
- la température de surchauffe du réfrigérant détectée par une sonde de température ST2 à la sortie de chacun des circuits 19 pour s'assurer que tout le réfrigérant présent dans l'échangeur-évaporateur 12 s'est évaporé avant son aspiration dans le compresseur 17.
- la température d'air détectée par une sonde de température ST3 en aval de l'échangeur-évaporateur 12 afin de contrôler que celle-ci reste dans la plage de consigne fixée.
- la température superficielle de l'échangeur-évaporateur 12 détectée par une sonde de température ST4 qui donne une information sur la formation possible de givre sur l'échangeur-évaporateur 12.
- la pression d'évaporation détectée par une sonde de pression SP2 dans l'échangeur-évaporateur 12 qui permet une correction de la température de surchauffe afin d'avoir la valeur exacte de celle-ci.

A la sortie de l'échangeur-évaporateur 12, le réfrigérant vaporisé est aspiré à une basse pression et comprimé vers une haute pression par le compresseur 17.

Dans le mode de réalisation illustré, le compresseur 17 est du type à vis avec régulation de capacité continue de 25 à 100 %. Toutefois, dans des modes de réalisation alternatifs, le compresseur 17 pourrait être un compresseur d'un autre type, comme par exemple un compresseur à pistons.

L'entraînement du compresseur 17 est assuré par un moteur électrique intégré au compresseur 17, de préférence dans un boitier hermétique accessible. Ce moteur peut être refroidi par le fluide réfrigérant aspiré.

Une sonde de pression SP3 mesure la pression d'aspiration en amont du compresseur 17 et adapte la vitesse de celui-ci par l'intermédiaire d'un régulateur afin que le débit aspiré s'adapte au débit injecté par les vannes de détente 20 dans l'échangeur évaporateur 12. Dans d'autres modes de réalisation, le débit aspiré par le compresseur 17 pourrait être régulé par d'autres moyens, tels qu'un tiroir de capacité pour varier la longueur utile de la vis dans un compresseur 17 à vis, la régulation du nombre d'unités compresseur actives dans un compresseur 17 en comportant plusieurs en parallèle, une vanne de dérivation, généralement externe, ou, dans un compresseur à pistons comportant plusieurs cylindres, la régulation du nombre de cylindres actifs, possiblement par le contrôle des clapets d'aspiration et/ou refoulement des cylindres.

Le fluide réfrigérant sortant du compresseur 17 est dirigé vers le condenseur 18.

Le condenseur 18 est du type à air. II est placé à l'extérieur de la carrosserie 4 et refroidi par de l'air ambiant propulsé à travers le condenseur 18 par un ventilateur de refroidissement 21. L'air de refroidissement du condenseur 18 circule dans un circuit sensiblement isolé au moins du circuit d'air conditionné pour empêcher que celui-ci en soit pollué.

Afin de permettre au condenseur 18 une régulation assurant à celui-ci de s'adapter au débit de réfrigérant, le ventilateur de refroidissement 21 est contrôlé par un variateur de fréquence relié à une sonde de pression SP4 (haute pression) dans le condenseur 18.

La pression de condensation peut donc être maintenue stable même sous des conditions extérieures changeantes ou pendant des modifications du débit de réfrigérant.

Un réservoir 22 horizontal de liquide récolte le réfrigérant condensé dans le condenseur 18. Un filtre déshydrateur 23 à cartouche placé à la sortie du réservoir 22 enlève l'humidité éventuellement présente dans le réfrigérant.

Avant que le réfrigérant ne soit dirigé vers les vannes de détente 20, celui-ci est sous-refroidi dans un circuit économiseur 24.

Ce circuit économiseur 24 comporte une branche principale 25, une branche secondaire 26 avec une vanne de détente 27, et un échangeur de chaleur 28 entre ladite branche principale 25 et ladite branche secondaire 26 en aval de sa vanne de détente 27. Une partie du débit de réfrigérant est déviée vers la branche secondaire 26 et vaporisée par la vanne de détente 27 de manière à refroidir le débit primaire de réfrigérant dans l'échangeur 28.

Ce débit secondaire de réfrigérant est détendu à une pression intermédiaire entre la haute et la basse pression du compresseur 17. La vanne de détente 27 est également à commande électronique. Le débit primaire de réfrigérant passe par l'échangeur 28 côté réfrigérant liquide en se sous-refroidissant grâce à l'évaporation du débit secondaire détendu à la pression intermédiaire. Ce dernier est ensuite aspiré directement par le compresseur 17.

Le sous-refroidissement du débit primaire permet une plus grande stabilité de fonctionnement des vannes de détente 20 de l'échangeur-évaporateur 12 en assurant à tout moment une phase 100 % liquide du réfrigérant à leur entrée.

Des variations de charges frigorifiques ou les changements de conditions externes pourraient conduire à l'apparition de bulles de gaz à l'entrée des vannes de détente 20, perturbant leur fonctionnement. Par sa présence, le circuit économiseur 24 évite ce problème.

Le mode de chauffage de l'unité 1 est assuré par des moyens de chauffage électrique 13 comportant un ensemble de résistances électriques.

Les moyens de chauffage électrique 13 sont placés dans le caisson de traitement d'air 15 contenant aussi l'échangeur-évaporateur 12 en aval de celui-ci.

Les moyens de chauffage électrique 13 se présentent sous la forme d'un ensemble de tubes inox sans ailettes. Ils sont câblés en, par exemple, quatre étages différents assurant la possibilité de délivrer la capacité calorifique strictement nécessaire.

La sonde de température ST1 contrôlant la pulsion de l'unité permet aussi de réguler les moyens de chauffage électrique 13.

Comme l'unité 1 du mode de réalisation illustré est alimentée par un groupe électrogène autonome, un échangeur de chaleur complémentaire 14 connecté au circuit de refroidissement du moteur Diesel 8 peut aussi assurer le chauffage de l'air traité. Cet échangeur de chaleur complémentaire 14 est du type comportant des tubes en cuivre et des ailettes en aluminium et sert à récupérer la chaleur dégagée par le circuit de refroidissement du moteur Diesel 8.

En fonction du mode d'utilisation de l'unité 1, en mode refroidissement ou chauffage, et de la température d'eau dans le circuit de refroidissement du moteur Diesel 8, une vanne à trois voies (non illustrée) dans ce circuit de refroidissement permet de diriger l'eau circulant dans le circuit vers un radiateur 29 rejetant la chaleur à l'ambiance ou vers l'échangeur de chaleur complémentaire 14 installé dans le caisson de traitement d'air 15 en aval de l'échangeur-évaporateur 12.

Le moteur Diesel 8 est refroidi par circulation d'eau de son circuit de refroidissement dans les culasses. Le radiateur 29 est de préférence ventilé grâce à un ventilateur axial 31.

Pour respecter certaines contraintes environnementales, il est préférable d'utiliser un moteur Diesel avec refroidissement d'air de combustion. Un échangeur de refroidissement de l'air de combustion, ou intercooler, est alors installé dans le châssis du radiateur 29.

Le moteur Diesel 8 possède les sécurités suivantes:
- haute température d'eau,
- manque de pression d'huile.

Un tableau électrique comprend le circuit de puissance et de commande de l'unité 1 entière.

Un automate installé dans le tableau électrique gère le fonctionnement de l'unité 1 en contrôlant l'ensemble des éléments constitutifs à savoir :
- Ventilateur principal 10,
- Compresseur 17,
- Condenseur 18,
- Vannes de détente 20 de l'échangeur-évaporateur 12,
- Vanne de détente 27 du circuit économiseur 24,
- Moyens de chauffage électrique 13,
- Vanne à trois voies du circuit de refroidissement du moteur Diesel 8.

Un panneau de commande comprend :
- Un bouton marche-arrêt,
- Un sélecteur de mode de fonctionnement (chaud, froid, ventilation),
- Une lampe de défaut,
- Une lampe de marche,
- Un afficheur indiquant les renseignements utiles à la mise en fonctionnement.

Dès que les gaines sont connectées entre l'unité 1 et l'avion, l'opérateur peut démarrer le moteur Diesel 8, ou mettre l'unité 1 autrement sous tension électrique, par action sur le bouton marche-arrêt principal.

Le moteur Diesel 8 est équipé d'un système de démarrage automatique.

Dès la présence de tension électrique, l'opérateur choisit le mode de fonctionnement de l'unité 1 (chaud-froid-ventilation). A partir de ce moment, l'unité 1 peut fonctionner de manière complètement automatique.

Après le démarrage du ventilateur principal 10, sa vitesse augmente jusqu'à ce que la sonde de pression SP1 à la sortie d'air 6 détecte que la surpression de l'air propulsé soit sensiblement égale à Pₘₐₓ. À partir de ce moment, la sonde de pression SP1 agit sur le variateur du ventilateur principal 10 pour maintenir la surpression à l'intérieur des conditions limites de fonctionnement et en maintenant le débit d'air maximum possible au niveau du ventilateur principal 10.

En mode froid, les vannes de détente 20 adaptent le débit de réfrigérant au débit d'air ainsi contrôlé pour maintenir la température de l'air captée par la sonde de température ST3 en aval de l'échangeur-évaporateur 12 dans une plage de consigne et la température superficielle de l'échangeur-évaporateur 12 captée par la sonde de température ST4 à une valeur, comme, par exemple, juste en-dessus de 0°C, évitant le givrage de l'échangeur-évaporateur 12. Le givrage de l'échangeur-évaporateur 12 peut occasionner une perte de débit d'air et conduire à l'arrêt de l'unité 1.

La modification du débit de réfrigérant influence, en fonctionnement, la pression d'aspiration (basse pression du circuit frigorifique). En fonction de la lecture de cette pression par la sonde de pression SP3, la capacité du compresseur 17 peut être adaptée pour maintenir cette pression dans une plage de consigne assurant le fonctionnement optimal de l'unité 1.

La variation du débit de réfrigérant influence également la charge de chaleur à dégager au niveau du condenseur 18. Pour assurer un fonctionnement stable, l'automate central, par l'intermédiaire du variateur de fréquence du ventilateur de refroidissement 21 du condenseur 18, modifie la vitesse de ventilateur 21 en fonction de la lecture de la sonde de haute pression SP4.

De même, pour l'échangeur-évaporateur 12, la vanne de détente 27 du circuit économiseur 24 adapte la quantité déviée du débit principal de réfrigérant pour assurer le sous-refroidissement correct du réfrigérant liquide avant son retour vers les vannes de détente 20 de l'échangeur-évaporateur 12.

En mode chauffage, lorsqu'il est présent, l'automate central utilise en premier lieu l'échangeur complémentaire 14 dans un souci d'économie d'énergie. En contrôlant la vanne trois voies du circuit de refroidissement du moteur Diesel 8, l'automate central envoie une partie du débit d'eau de refroidissement du moteur Diesel 8 vers l'échangeur complémentaire 14 pour réchauffer l'air propulsé vers l'appareil.

Si la température d'air à la pulsion est trop froide, l'automate central met sous tension les résistances des moyens de chauffage électrique en régulant les différents étages jusqu'à la valeur de consigne. Cette consigne est une valeur maximum prédéfinie en fonction des caractéristiques physiques des matériaux constitutifs de l'unité 1, des gaines de connexion et des pressions maximum supportées par l'avion sur lequel l'unité 1 est connectée.

Lors du fonctionnement en mode chaud ou en mode froid, l'automate central gère l'unité afin que celle-ci fonctionne en permanence sans que l'unité 1 ne s'arrête en sécurité. Outre les sécurités matérielles arrêtant les éléments, les grandeurs qui peuvent arrêter l'unité complètement sont :
- Surintensité générale,
- Surintensité du ventilateur principal 10,
- Haute pression de condensation (en mode froid),
- Haute pression de l'air propulsé.

En cas de risque de surintensité général, un seuil de pré-alarme avant arrêt complet est détecté. L'automate central réduit alors la consommation électrique du compresseur 17 (en mode froid) ou des moyens de chauffage électrique 13 (en mode chaud) en réduisant la capacité de ceux-ci par action sur leur régulation.

En cas de risque de surintensité au niveau du ventilateur principal 10, la charge électrique du moteur du ventilateur principal 10 est réduite par réduction de sa vitesse de rotation.

En cas de risque de haute pression de condensation, la charge frigorifique du compresseur 17 est réduite par l'automate central par action sur sa régulation.

En cas de risque de surpression de l'air propulsé, la vitesse de rotation du ventilateur principal 10 est réduite par l'intermédiaire du variateur de fréquence.

Ces différentes situations conduisent à une réduction de la capacité de l'unité 1 afin de maintenir celle-ci en fonctionnement lorsque les conditions de fonctionnement sont plus sévères que prévu sans dépasser les limites de sécurité arrêtant immédiatement l'unité 1.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

### REFERENCES DES FIGURES

- 1: Unité de conditionnement d'air
- 2: Châssis
- 3: Roues
- 4: Carrosserie
- 5: Entrée d'air
- 5': Filtres
- 6: Sortie d'air
- 7: Bouches de pulsion
- 7a: Clapet
- 7b: Clapet
- 7c: Clapet
- 8: Moteur Diesel
- 9: Générateur électrique
- 10: Ventilateur principal
- 11: Circuit de réfrigérant
- 12: Échangeur-évaporateur
- 13: Moyens de chauffage électrique
- 14: Échangeur complémentaire
- 15: Caisson de traitement
- 16: Bac de récolte
- 17: Compresseur
- 18: Condenseur
- 19: Circuits parallèles
- 20: Vannes de détente
- 21: Ventilateur de refroidissement
- 22: Réservoir horizontal de réfrigérant
- 23: Filtre déshydrateur
- 24: Circuit économiseur
- 25: Branche principale
- 26: Branche secondaire
- 27: Vanne de détente
- 28: Échangeur de chaleur
- 29: Radiateur
- 30: Compartiment moteur
- 31: Ventilateur
- A₁: Intersection des courbes débit/pression V₂ et E₁
- A₂: Intersection des courbes débit/pression V₂ et E₂
- A₃: Intersection des courbes débit/pression V₂ et E₃
- B₁: Intersection de la courbe débit/pression E1 et Pₘₐₓ
- B₂: Intersection de la courbe débit/pression E2 et Pₘₐₓ
- B₃: Intersection de la courbe débit/pression E3 et Pₘₐₓ
- D: Débit d'air
- D_{A1}: Débit d'air au point A₁
- D_{A2}: Débit d'air au point A₂
- D_{A3}: Débit d'air au point A₃
- D_{B1}: Débit d'air au point B₁
- D_{B2}: Débit d'air au point B₂
- D_{B3}: Débit d'air au point B₃
- E₁: Courbe débit/pression d'une première enceinte
- E₂: Courbe débit/pression d'une deuxième enceinte
- E₃: Courbe débit/pression d'une troisième enceinte
- P: Surpression de l'air conditionné à la sortie d'air
- Pₘₐₓ: Surpression maximale
- SP1: Sonde de pression
- SP2: Sonde de pression
- SP3: Sonde de pression
- SP4: Sonde de pression
- ST1: Sonde de température
- ST2: Sonde de température
- ST3: Sonde de température
- ST4: Sonde de température
- V₁: Courbe débit/pression d'une première vitesse de ventilateur
- V₂: Courbe débit/pression d'une deuxième vitesse de ventilateur
- V₃: Courbe débit/pression d'une troisième vitesse de ventilateur
- V₄: Courbe débit/pression d'une quatrième vitesse de ventilateur

## Revendications

1. Unité (1) de conditionnement d'air comportant :
- un circuit d'air avec une entrée d'air (5), un ventilateur principal (10) et une sortie d'air (6) adaptée pour être connectée à une enceinte, telle que par exemple un aéronef en stationnement au sol, de préférence à travers une ou plusieurs gaines flexibles, et
- un circuit de réfrigérant comportant un échangeur-évaporateur (12) placé dans ledit circuit d'air pour refroidir l'air en évaporant le réfrigérant, un compresseur (17) et un condenseur (18) pour condenser le réfrigérant avant son retour dans l'échangeur-évaporateur (12), et
**caractérisée en ce que,**
- ledit échangeur-évaporateur (12) comporte plusieurs circuits parallèles (19) avec chacun au moins une vanne de détente (20),
- ledit circuit d'air comporte aussi une sonde de température (ST3) en aval de l'échangeur-évaporateur (12) reliée à des moyens de contrôle desdites vannes de détente (20) pour réguler le débit de réfrigérant afin de maintenir la température d'air en aval de l'échangeur-évaporateur (12) dans une plage de consigne, et une sonde de pression (SP1) à la sortie d'air (6) reliée à des moyens de régulation de vitesse et/ou puissance du ventilateur principal (10) afin de ne pas dépasser une surpression maximale à la sortie d'air (6), et
- ledit circuit de réfrigérant comporte aussi une sonde (SP3) de pression d'aspiration du compresseur (17) reliée à des moyens de régulation du débit masse de réfrigérant aspiré par le compresseur (17) afin de maintenir la pression d'aspiration du compresseur (17) dans une plage de consigne.

2. Unité (1) de conditionnement d'air suivant une quelconque des revendications précédentes, où ledit circuit d'air comporte aussi une sonde de température (ST1) à la sortie d'air (6) reliée à des moyens de régulation de vitesse et/ou puissance du ventilateur principal (10) pour contrôler son débit afin de maintenir la température à la sortie d'air (6) dans une plage de consigne.

3. Unité (1) de conditionnement d'air suivant une quelconque des revendications précédentes, où ledit condenseur (18) peut être refroidi par air.

4. Unité (1) de conditionnement d'air suivant la revendication 3, où ledit condenseur (18) comporte un ventilateur de refroidissement (21) et une sonde de pression (SP4) du réfrigérant reliée à des moyens de régulation de vitesse et/ou puissance du ventilateur de refroidissement (21) pour contrôler le refroidissement du condenseur afin de maintenir la pression du réfrigérant dans le condenseur (18) dans une plage de consigne.

5. Unité (1) de conditionnement d'air suivant une quelconque des revendications précédentes, où ledit échangeur-évaporateur (12) comporte aussi une sonde (ST2) de température du réfrigérant en sortie de chacun desdits circuits parallèles (19) reliée auxdits moyens de contrôle desdites vannes de détente (20) pour réguler le débit de réfrigérant afin d'assurer l'évaporation de sensiblement tout le débit de réfrigérant dans ledit échangeur-évaporateur (12).

6. Unité (1) de conditionnement d'air suivant la revendication 5, où ledit échangeur-évaporateur (12) comporte aussi une sonde (SP2) de pression du réfrigérant en sortie desdits circuits parallèles (19) reliée auxdits moyens de contrôle desdites vannes de détente (20) pour corriger la température captée par la sonde (ST2) de température du réfrigérant en sortie du même circuit parallèle (19).

7. Unité (1) de conditionnement d'air suivant une quelconque des revendications précédentes, où ledit échangeur-évaporateur (12) comporte en outre une sonde (ST4) de température superficielle de l'échangeur-évaporateur (12) reliée auxdits moyens de contrôle desdites vannes de détente (20) pour réguler le débit de réfrigérant afin d'éviter la formation de givre sur la surface de l'échangeur-évaporateur (12).

8. Unité (1) de conditionnement d'air suivant une quelconque des revendications précédentes, où le circuit de réfrigérant comporte en outre un circuit économiseur (24) en aval du condenseur (18), ledit circuit économiseur (24) comportant une branche principale (25), une branche secondaire (26) avec une vanne de détente (27), et un échangeur de chaleur (28) entre ladite branche principale (25) et ladite branche secondaire (26) en aval de sa vanne de détente (27), de manière à ce que, en fonctionnement, un débit secondaire de réfrigérant soit dévié vers ladite branche secondaire (26), pour être détendu dans la vanne de détente (27) et refroidir à travers l'échangeur de chaleur (28) un débit primaire de réfrigérant passant par la branche principale (25) afin d'éviter l'apparition de bulles de gaz dans le réfrigérant en amont de l'échangeur-évaporateur (12).

9. Unité (1) de conditionnement d'air suivant une quelconque des revendications précédentes, comportant en outre un moteur thermique (8), de préférence Diesel, couplé à un générateur (9) pour l'alimentation électrique de l'unité (1).

10. Unité (1) de conditionnement d'air suivant la revendication 9, où ledit moteur thermique (8) comporte un circuit de refroidissement avec :
- un radiateur (29), de préférence avec un ventilateur (31), pour refroidir un fluide de refroidissement du moteur thermique (8),
- un échangeur de chaleur complémentaire (14) placé dans ledit circuit d'air, de préférence en aval dudit échangeur-évaporateur (12), pour chauffer l'air en refroidissant le fluide de refroidissement du moteur thermique (8), et
- une vanne à trois voies permettant de diriger le fluide de refroidissement du moteur thermique (8) alternativement vers le radiateur (29) ou vers l'échangeur de chaleur complémentaire (14).

11. Unité (1) de conditionnement d'air suivant une quelconque des revendications précédentes, où ledit circuit d'air comporte en outre des moyens de chauffage électrique (13), de préférence en aval dudit échangeur-évaporateur (12), avec un ensemble de résistances électriques, de préférence câblées en plusieurs étages, et une sonde de température (ST1) en aval des moyens de chauffage électrique (13) reliée à des moyens de contrôle dudit ensemble de résistances électriques pour réguler la puissance de chauffage afin de maintenir la température d'air en aval des moyens de chauffage (13) dans une plage de consigne.

12. Unité (1) de conditionnement d'air suivant une quelconque des revendications précédentes, où ledit réfrigérant est un hydrofluorocarbure, de préférence du R134a.

13. Unité (1) de conditionnement d'air suivant une quelconque des revendications précédentes, où ledit ventilateur principal (10) est un ventilateur centrifuge.

14. Unité (1) de conditionnement d'air suivant une quelconque des revendications précédentes, où ledit compresseur (17) est un compresseur à vis.

15. Unité (1) de conditionnement d'air suivant une quelconque des revendications précédentes, sous la forme d'une unité mobile et autonome, pour, par exemple, fournir de l'air conditionné à des plateformes mobiles, telles que des aéronefs au sol.

16. Procédé de conditionnement d'air comportant les étapes suivantes:
- de l'air ambiant entre dans un circuit d'air propulsé par un ventilateur principal (10),
- ledit air ambiant passe à travers un échangeur-évaporateur (12), où il est refroidi par évaporation d'un débit de réfrigérant circulant dans l'échangeur-évaporateur (12),
- ledit air refroidi est propulsé à travers une sortie d'air (6) vers une enceinte, telle que par exemple un aéronef en stationnement au sol, de préférence à travers une ou plusieurs gaines flexibles,
- ledit réfrigérant est comprimé dans un compresseur (17) en aval de l'échangeur-évaporateur (12),
- ledit réfrigérant est condensé dans un condenseur (18) en aval du compresseur (17), et
le procédé est **caractérisé en ce que,**
- ledit échangeur-évaporateur (12) comporte plusieurs circuits parallèles (19) avec chacun au moins une vanne de détente (20),
- le débit de réfrigérant à travers chacune desdites vannes de détente (20) est régulé de manière à maintenir la température d'air en aval de l'échangeur-évaporateur (12) dans une plage de consigne,
- le débit masse de réfrigérant aspiré par le compresseur (17) est régulé de manière à maintenir la pression d'aspiration du compresseur (17) dans une plage de consigne, et
- la vitesse et/ou la puissance du ventilateur principal (10) est régulée de manière à ne pas dépasser une surpression maximale à la sortie d'air (6)..

17. Procédé suivant la revendication 16, où la vitesse et/ou la puissance du ventilateur principal (10) est régulée de manière à réguler son débit pour maintenir la température à la sortie d'air (6) dans une plage de consigne.

18. Procédé suivant une quelconque des revendications 16 ou 17, où ledit condenseur (18) est refroidi par air avec un ventilateur de refroidissement (21) dont la vitesse et/ou la puissance est régulée de manière à maintenir la pression du réfrigérant dans le condenseur (18) dans une plage de consigne.

19. Procédé suivant une quelconque des revendications 16 à 18, où le débit de réfrigérant à travers chacune desdites vannes de détente (20) de l'échangeur-évaporateur (12) est aussi régulé de manière à assurer l'évaporation de sensiblement tout le débit de réfrigérant dans ledit échangeur-évaporateur (12).

20. Procédé suivant une quelconque des revendications 16 à 19, où le débit de réfrigérant à travers chacune desdites vannes de détente (20) de l'échangeur-évaporateur (12) est aussi régulé de manière à maintenir une température superficielle de l'échangeur-évaporateur (12) supérieure à un seuil minimal pour éviter la formation de givre sur la surface de l'échangeur-évaporateur (12).

21. Procédé suivant une quelconque des revendications 16 à 20, comportant en outre les étapes suivantes :
- le réfrigérant est divisé en aval du condenseur en au moins un débit primaire et un débit secondaire,
- le débit secondaire est détendu dans une vanne de détente (27) d'un circuit économiseur (24),
- les débits primaire et secondaire se croisent dans un échangeur de chaleur (28) dudit circuit économiseur (24), de manière à ce que le débit secondaire refroidisse le débit primaire,
- le débit secondaire est retourné vers le condenseur (18), et
- le débit primaire refroidi est retourné vers l'échangeur-évaporateur (12), et
où le débit secondaire est régulé de manière à réguler la température du débit primaire refroidi pour éviter la formation de bulles de gaz dans le réfrigérant en amont de l'échangeur-évaporateur (12).

## Claims

1. Air conditioning unit (1) comprising:
- an air circuit with an air inlet (5), a main fan (10) and an air outlet (6) adapted to be connected to an enclosure, such as for example an aircraft parked on the ground, preferably through one or more flexible ducts, and
- a refrigerant circuit comprising an exchanger/evaporator (12) placed in the said air circuit in order to cool the air by evaporating the refrigerant, a compressor (17) and a condenser (18) for condensing the refrigerant before return thereof to the exchanger/evaporator (12), and
**characterised in that**
- the said exchanger/evaporator (12) comprises several parallel circuits (19) each with at least one pressure reducing valve (20),
- the said air circuit also comprises a temperature sensor (ST3) downstream of the exchanger/evaporator (12) connected to means of controlling the said pressure reduction valves (20) in order to regulate the flow of refrigerant so as to maintain the air temperature downstream of the exchanger/evaporator (12) within a set range, and a pressure sensor (SP1) at the air outlet (6) connected to means of regulating the speed and/or power of the main fan (10) in order not to exceed a maximum overpressure at the air outlet (6), and
- the said refrigerant circuit also comprises a sensor (SP3) for the aspiration pressure of the compressor (17) connected to means of regulating the mass flow rate of refrigerant aspirated by the compressor (17) in order to maintain the aspiration pressure of the compressor (17) within a set range.

2. Air conditioning unit (1) according to any one of the preceding claims, wherein the said air circuit also comprises a temperature sensor (ST1) at the air outlet (6) connected to means of regulating the speed and/or power of the main fan (10) in order to control its output so as to maintain the temperature at the air outlet (6) within a set range.

3. Air conditioning unit (1) according to any one of the preceding claims, wherein the said condenser (18) can be cooled by air.

4. Air conditioning unit (1) according to claim 3, wherein the said condenser (18) comprises a cooling fan (21) and a sensor (SP4) for the pressure of the refrigerant connected to means of regulating the speed and/or power of the cooling fan (21) in order to control the cooling of the condenser so as to maintain the pressure of the refrigerant in the condenser (18) within a set range.

5. Air conditioning unit (1) according to any one of the preceding claims, wherein the said exchanger/evaporator (12) also comprises a sensor (ST2) for the temperature of the refrigerant at the outlet of each of the said parallel circuits (19), connected to the said means of controlling the said pressure reduction valves (20) in order to regulate the flow of refrigerant so as to ensure the evaporation of substantially all the flow of refrigerant in the said exchanger/evaporator (12).

6. Air conditioning unit (1) according to claim 5, wherein the said exchanger/evaporator (12) also comprises a pressure sensor (SP2) for the refrigerant at the outlet from the said parallel circuits (19), connected to the said means of controlling the said pressure reduction valves (20) in order to correct the temperature sensed by the sensor (ST2) for the temperature of the refrigerant at the outlet from the same parallel circuit (19).

7. Air conditioning unit (1) according to any one of the preceding claims, wherein the said exchanger/evaporator (12) also comprises a sensor (ST4) for the surface temperature of the exchanger/evaporator (12) connected to the said means of controlling the said pressure reduction valves (20) in order to regulate the flow of refrigerant in order to prevent the formation of frost on the surface of the exchanger/evaporator (12).

8. Air conditioning unit (1) according to any one of the preceding claims, wherein the refrigerant circuit also comprises an economiser circuit (24) downstream of the condenser (18), the said economiser circuit (24) comprising a main branch (25), a secondary branch (26) with a pressure reduction valve (27), and a heat exchanger (28) between the said main branch (25) and the said secondary branch (26) downstream of its pressure reduction valve (27), so that, in operation, a secondary flow of refrigerant is diverted to the said secondary branch (26) in order to be expanded in the pressure reduction valve (27) and to cool, through the heat exchanger (28), a primary flow of refrigerant passing through the main branch (25) so as to prevent the appearance of gas bubbles in the refrigerant upstream of the exchanger/evaporator (12).

9. Air conditioning unit (1) according to any one of the preceding claims, also comprising a thermal engine (8), preferably diesel, coupled to a generator (9) for the electrical supply of the unit (1).'

10. Air conditioning unit (1) according to claim 9, wherein the said thermal engine (8) comprises a cooling circuit with:
- a radiator (29), preferably with a fan (31), for cooling a fluid cooling the thermal engine (8),
- a supplementary heat exchanger (14) placed in the said air circuit, preferably downstream of the said exchanger/evaporator (12), in order to heat the air while cooling the cooling fluid of the thermal engine (8), and
- a three-way valve for directing the cooling fluid for the thermal engine (8) alternately to the radiator (29) or to the supplementary heat exchanger (14).

11. Air conditioning unit (1) according to any one of the preceding claims, wherein the said air circuit also comprises electrical heating means (13), preferably downstream of the said exchanger/evaporator (12), with a set of electrical elements, preferably wired in several stages, and a temperature sensor (ST1) downstream of the electrical heating means (13) connected to means of controlling the said set of electrical elements in order to regulate the heating power so as to maintain the air temperature downstream of the heating means (13) within a set range.

12. Air conditioning unit (1) according to any one of the preceding claims, wherein the said refrigerant is a hydrofluorocarbon, preferably R134a.

13. Air conditioning unit (1) according to any one of the preceding claims, wherein the said main fan (10) is a centrifugal fan.

14. Air conditioning unit (1) according to any one of the preceding claims, wherein the said compressor (17) is a screw compressor.

15. Air conditioning unit (1) according to any one of the preceding claims, in the form of a mobile self-contained unit, in order for example to supply conditioned air to mobile platforms, such as aircraft on the ground.

16. Air conditioning method comprising the following steps:
- ambient air enters an air circuit propelled by a main fan (10),
- the said ambient air passes through an exchanger/evaporator (12), where it is cooled by evaporation of a flow of refrigerant circulating in the exchanger/evaporator (12),
- the said cooled air is propelled through an air outlet (6) to an enclosure, such as for example an aircraft parked on the ground, preferably through one or more flexible ducts,
- the said refrigerant is compressed in a compressor (17) downstream of the exchanger/evaporator (12),
- the said refrigerant is condensed in a condenser (18) downstream of the compressor (17), and the method is **characterised in that**
- the said exchanger/evaporator (12) comprises several parallel circuits (19) each with at least one pressure reduction valve (20),
- the flow of refrigerant through each of the said pressure reduction valves (20) is regulated so as to maintain the air temperature downstream of the exchanger/evaporator (12) within a set range,
- the mass flow rate of refrigerant aspirated by the compressor (17) is regulated so as to maintain the aspiration pressure of the compressor (17) within a set range, and
- the speed and/or power of the main fan (20) is regulated so as not to exceed a maximum overpressure at the air outlet (6).

17. Method according to claim 16, wherein the speed and/or power of the main fan (10) is regulated so as to regulate its flow rate so as to maintain the temperature at the air outlet (6) within a set range.

18. Method according to either one of claims 16 or 17, wherein the said condenser (18) is cooled by air with a cooling fan (21) the speed and/or power of which is regulated so as to maintain the pressure of the refrigerant in the condenser (18) within a set range.

19. Method according to any one of claims 16 to 18, wherein the flow of refrigerant through each of the said pressure reduction valves (20) of the exchanger/evaporator (12) is also regulated so as to ensure the evaporation of substantially all the flow of refrigerant in the said exchanger/evaporator (12).

20. Method according to any one of claims 16 to 19, wherein the flow of refrigerant through each of the said pressure reduction valves (20) of the exchanger/evaporator (12) is also regulated so as to maintain a surface temperature of the exchanger/evaporator (12) above a minimum threshold in order to prevent the formation of frost on the surface of the exchanger/evaporator (12).

21. Method according to any one of claims 16 to 20, also comprising the following steps:
- the refrigerant is divided downstream of the condenser into at least a primary flow and a secondary flow,
- the secondary flow is expanded in a pressure reduction valve (27) of an economiser circuit (24),
- the primary and secondary flows cross in a heat exchanger (28) of the said economiser circuit (24) so that the secondary flow cools the primary flow,
- the secondary flow is returned to the condenser (18), and
- the cooled primary flow is returned to the exchanger/evaporator (12), and
wherein the secondary flow is regulated so as to regulate the temperature of the cooled primary flow in order to prevent the formation of gas bubbles in the refrigerant upstream of the exchanger/evaporator (12).

## Patentansprüche

1. Klimagerät (1), das Folgendes umfasst:
- einen Luftkreislauf mit einem Lufteintritt (5), einem Hauptlüfter (10) und einem Luftaustritt (6), der angepasst ist, um, vorzugsweise durch einen oder mehrere biegsame Kanäle, an einen Raum, wie zum Beispiel ein am Boden stehendes Luftfahrzeug, angeschlossen zu werden, und
- einen Kältemittelkreislauf, der einen Wärmeaustauscher/Verdampfer (12), der im Luftkreislauf angebracht ist, um die Luft durch Verdampfen des Kältemittels zu kühlen, einen Verdichter (17) und einen Kondensator (18) zum Kondensieren des Kältemittels vor seiner Rückleitung in den Wärmeaustauscher/Verdampfer (12) umfasst, und
**dadurch gekennzeichnet, dass:**
- der Wärmeaustauscher/Verdampfer (12) mehrere parallele Kreisläufe (19) mit jeweils mindestens einem Expansionsventil (20) umfasst,
- wobei der Luftkreislauf stromabwärts des Wärmeaustauschers/Verdampfers (12) auch einen Temperaturfühler (ST3), der mit Mitteln zur Steuerung der Expansionsventile (20) verbunden ist, um die Durchflussmenge von Kältemittel zu regulieren, um die Lufttemperatur stromabwärts des Wärmeaustauschers/Verdampfers (12) in einem Sollbereich zu halten, und am Luftaustritt (6) einen Druckfühler (SP1) umfasst, der mit Mitteln zur Regulierung der Geschwindigkeit und/oder Leistung des Hauptlüfters (10) verbunden ist, um nicht einen Höchstüberdruck am Luftaustritt (6) zu überschreiten, und
- wobei der Kältemittelkreislauf auch einen Fühler (SP3) für den Ansaugdruck des Verdichters (17) umfasst, der mit Mitteln zur Regulierung des Massendurchflusses von durch den Verdichter (17) angesaugtem Kältemittel verbunden ist, um den Ansaugdruck des Verdichters (17) in einem Sollbereich zu halten.

2. Klimagerät (1) nach dem vorhergehenden Anspruch, wobei der Luftkreislauf am Luftaustritt (6) auch einen Temperaturfühler (ST1) umfasst, der mit Mitteln zur Regulierung der Geschwindigkeit und/oder Leistung des Hauptlüfters (10) verbunden ist, um seine Durchflussmenge zu steuern, um die Temperatur am Luftaustritt (6) in einem Sollbereich zu halten.

3. Klimagerät (1) nach einem der vorhergehenden Ansprüche, wobei der Kondensator (18) luftgekühlt sein kann.

4. Klimagerät (1) nach Anspruch 3, wobei der Kondensator (18) einen Kühllüfter (21) und einen Kältemitteldruckfühler (SP4) umfasst, der mit Mitteln zur Regulierung der Geschwindigkeit und/oder Leistung des Kühllüfters (21) verbunden ist, um die Kühlung des Kondensators zu steuern, um den Druck des Kältemittels im Kondensator (18) in einem Sollbereich zu halten.

5. Klimagerät (1) nach einem der vorhergehenden Ansprüche, wobei der Wärmeaustauscher/Verdampfer (12) am Austritt von jedem der parallelen Kreisläufe (19) auch einen Kältemitteltemperaturfühler (ST2) umfasst, der mit den Mitteln zur Steuerung der Expansionsventile (20) verbunden ist, um den Kältemitteldurchfluss zu regulieren, um die Verdampfung von im Wesentlichen des gesamten Kältemitteldurchflusses im Wärmeaustauscher/Verdampfer (12) zu gewährleisten.

6. Klimagerät (1) nach Anspruch 5, wobei der Wärmeaustauscher/Verdampfer (12) am Austritt der parallelen Kreisläufe (19) auch einen Kältemitteldruckfühler (SP2) umfasst, der mit den Mitteln zur Steuerung der Expansionsventile (20) verbunden ist, um die durch den Kältemitteltemperaturfühler (ST2) am Austritt des gleichen parallelen Kreislaufs (19) gemessene Temperatur zu berichtigen.

7. Klimagerät (1) nach einem der vorhergehenden Ansprüche, wobei der Wärmeaustauscher/Verdampfer (12) ferner einen Fühler (ST4) für die Oberflächentemperatur des Wärmeaustauschers/Verdampfers (12) umfasst, der mit den Mitteln zur Steuerung der Expansionsventile (20) verbunden ist, um die Kältemitteldurchflussmenge zu regulieren, um die Bildung von Reif auf der Oberfläche des Wärmeaustauschers/Verdampfers (12) zu vermeiden.

8. Klimagerät (1) nach einem der vorhergehenden Ansprüche, wobei der Kältemittelkreislauf ferner stromabwärts des Kondensators (18) einen Economiserkreislauf (24) umfasst, wobei der Economiserkreislauf (24) einen Hauptzweig (25), einen Nebenzweig (26) mit einem Expansionsventil (27) und einen Wärmetauscher (28) zwischen dem Hauptzweig (25) und dem Nebenzweig (26) stromabwärts seines Expansionsventils (27) umfasst, derart, dass im Betrieb eine Nebendurchflussmenge von Kältemittel zu dem Nebenzweig (26) umgeleitet wird, um im Expansionsventil (27) expandiert zu werden, und durch den Wärmetauscher (28) eine Hauptdurchflussmenge von Kältemittel, das den Hauptzweig (25) durchquert, gekühlt wird, um das Auftreten von Gasblasen im Kältemittel stromaufwärts des Wärmeaustauschers/Verdampfers (12) zu vermeiden.

9. Klimagerät (1) nach einem der vorhergehenden Ansprüche, wobei es ferner einen Verbrennungsmotor (8), vorzugsweise einen Dieselmotor, umfasst, der an einen Generator (9) für die Stromversorgung des Geräts (1) gekoppelt ist.

10. Klimagerät (1) nach Anspruch 9, wobei der Verbrennungsmotor (8) einen Kühlkreislauf mit Folgendem umfasst:
- einem Kühler (29), vorzugsweise mit einem Lüfter (31), zum Kühlen des Kühlmittels des Verbrennungsmotors (8),
- einem zusätzlichen Wärmetauscher (14), der im Luftkreislauf, vorzugsweise stromabwärts des Wärmeaustauschers/Verdampfers (12), angeordnet ist, um die Luft durch Kühlen des Kühlmittels des Verbrennungsmotors (8) zu erwärmen, und
- einem Dreiwegeventil, das es ermöglicht, das Kühlmittel des Verbrennungsmotors (8) wechselweise zum Kühler (29) oder zum zusätzlichen Wärmetauscher (14) zu leiten.

11. Klimagerät (1) nach einem der vorhergehenden Ansprüche, wobei der Luftkreislauf ferner, vorzugsweise stromabwärts des Wärmeaustauschers/Verdampfers (12), elektrische Erwärmungsmittel (13) mit einem Satz vorzugsweise in mehreren Stufen verdrahteter elektrischer Widerstände und stromabwärts der elektrischen Erwärmungsmittel (13) einen Temperaturfühler (ST1) umfasst, der mit Mitteln zur Steuerung des Satzes elektrischer Widerstände verbunden ist, um die Erwärmungsleistung zu regulieren, um die Lufttemperatur stromabwärts der Erwärmungsmittel (13) in einem Sollbereich zu halten.

12. Klimagerät (1) nach einem der vorhergehenden Ansprüche, wobei das Kältemittel ein Fluorkohlenwasserstoff, vorzugsweise R134a, ist.

13. Klimagerät (1) nach einem der vorhergehenden Ansprüche, wobei der Hauptlüfter (10) ein Zentrifugallüfter ist.

14. Klimagerät (1) nach einem der vorhergehenden Ansprüche, wobei der Verdichter (17) ein Schraubenverdichter ist.

15. Klimagerät (1) nach einem der vorhergehenden Ansprüche in der Form einer beweglichen und selbständigen Einheit, um zum Beispiel beweglichen Plattformen wie Luftfahrzeugen am Boden klimatisierte Luft zu liefern.

16. Klimatisierungsverfahren, das die folgenden Schritte umfasst:
- Eintreten von durch einen Hauptlüfter (10) bewegter Umgebungsluft in einen Luftkreislauf,
- wobei die Umgebungsluft einen Wärmeaustauscher/Verdampfer (12) durchquert, wo sie durch Verdampfung einer Durchflussmenge von Kältemittel, das im Wärmeaustauscher/Verdampfer (12) umläuft, gekühlt wird,
- wobei die gekühlte Luft durch einen Luftaustritt (6), vorzugsweise durch einen oder mehrere biegsame Kanäle, zu einem Raum, wie zum Beispiel einem am Boden stehenden Luftfahrzeug, bewegt wird,
- wobei das Kältemittel in einem Verdichter (17) stromabwärts des Wärmeaustauschers/Verdichters (12) verdichtet wird,
- wobei das Kältemittel in einem Kondensator (18) stromabwärts des Verdichters (17) kondensiert wird, und
das Verfahren **dadurch gekennzeichnet ist, dass**:
- der Wärmeaustauscher/Verdichter (12) mehrere parallele Kreisläufe (19) mit jeweils mindestens einem Expansionsventil (20) umfasst,
- wobei die Kältemitteldurchflussmenge durch jedes der Expansionsventile (20) derart reguliert wird, dass die Lufttemperatur stromabwärts des Wärmeaustauschers/Verdichters (12) in einem Sollbereich gehalten wird,
- der Massendurchfluss des durch den Kompressor (17) angesaugten Kältemittels derart reguliert wird, dass der Ansaugdruck des Kompressors (17) in einem Sollbereich gehalten wird, und
- die Geschwindigkeit und/oder die Leistung des Hauptlüfters (10) derart reguliert werden, dass am Luftaustritt (6) ein Höchstüberdruck nicht überschritten wird.

17. Verfahren nach Anspruch 16, wobei die Geschwindigkeit und/oder die Leistung des Hauptlüfters (10) derart reguliert werden, dass seine Durchflussmenge reguliert wird, um die Temperatur am Luftaustritt (6) in einem Sollbereich zu halten.

18. Verfahren nach einem der Ansprüche 16 oder 17, wobei der Kondensator (18) mit einem Kühllüfter (21) luftgekühlt wird, dessen Geschwindigkeit und/oder Leistung derart reguliert werden, dass der Druck des Kältemittels im Kondensator (18) in einem Sollbereich gehalten wird.

19. Verfahren nach einem der Ansprüche 16 bis 18, wobei die Durchflussmenge von Kältemittel durch jedes der Expansionsventile (20) des Wärmeaustauschers/Verdampfers (12) auch derart reguliert wird, dass die Verdampfung von im Wesentlichen der gesamten Kältemitteldurchflussmenge in dem Wärmeaustauscher/Verdampfer (12) gewährleistet wird.

20. Verfahren nach einem der Ansprüche 16 bis 19, wobei die Kältemitteldurchflussmenge durch jedes der Expansionsventile (20) des Wärmeaustauschers/Verdampfers (12) auch derart reguliert wird, dass eine Oberflächentemperatur des Wärmeaustauschers/Verdampfers (12) oberhalb einer Mindestschwelle gehalten wird, um die Bildung von Reif auf der Oberfläche des Wärmeaustauschers/Verdampfers (12) zu vermeiden.

21. Verfahren nach einem der Ansprüche 16 bis 20, das ferner die folgenden Schritte umfasst:
- Teilen des Kältemittels stromabwärts des Kondensators in mindestens eine Hauptdurchflussmenge und eine Nebendurchflussmenge,
- Expandieren der Nebendurchflussmenge in einem Expansionsventil (27) eines Economiserkreislaufs (24),
- Kreuzen der Haupt- und Nebendurchflussmenge im Wärmetauscher (28) des Economiserkreislaufs (24), derart, dass die Nebendurchflussmenge die Hauptdurchflussmenge kühlt,
- Rückleiten der Nebendurchflussmenge zum Kondensator (18), und
- Rückleiten der gekühlten Hauptdurchflussmenge zum Wärmeaustauscher/Verdampfer (12), und
wobei die Nebendurchflussmenge derart reguliert wird, dass die Temperatur der gekühlten Hauptdurchflussmenge reguliert wird, um die Bildung von Gasblasen im Kältemittel stromaufwärts des Wärmeaustauschers/Verdampfers (12) zu vermeiden.
